# EUROPÄISCHE PATENTANMELDUNG

(11) **EP 3 061 665 A1**
(43) Veröffentlichungstag der Anmeldung: **31.08.2016**
(21) Anmeldenummer: 16156991.8
(22) Anmeldetag: 23.02.2016
(51) Int. Cl.: B61D 19/00, B61D 29/00, B61D 3/10, B61F 5/44, B61F 3/12, B61G 5/02

(54) **VERFAHREN ZUR STEUERUNG EINES ELEKTRISCH ANSTEUERBAREN SYSTEMS IN EINEM VERBUND AUS FAHRZEUGEN ODER FAHRZEUGTEILEN**

(30) Priorität: 24.02.2015 DE 102015203297
(71) Anmelder: Bombardier Transportation GmbH, 10785 Berlin (DE)
(72) Erfinder: Losert, Christian, 68307 Mannheim (DE); Möller, Markus, 67734 Obersulzbach (DE); Sticka, Karsten, 67677 Enkenbach-Alsenborn (DE)
(74) Vertreter: Patentanwälte Bressel und Partner mbB

(57) **Zusammenfassung**

Die Erfindung betrifft ein Verfahren zur Steuerung zumindest eines elektrisch ansteuerbaren Systems (24, 26), das in einem Verbund von zumindest zwei gelenkig miteinander verbundenen Fahrzeugen oder einem Verbund von zumindest zwei gelenkig miteinander verbundenen Fahrzeugteilen (2, 3) angeordnet ist, umfassend
- Erzeugen eines analogen elektrischen Signals mit zumindest einem Winkelsensor (19) oder zumindest einer Winkelsensoranordnung in Abhängigkeit eines Winkels zwischen den Längsachsen (X1, X2) der zumindest zwei Fahrzeuge oder der zumindest zwei Fahrzeugteile (2, 3),
- Feststellen, ob ein Schwellwert des analogen elektrischen Signals erreicht oder überschritten ist,
- Aktivieren oder Deaktivieren eines elektrisch ansteuerbaren Systems (24, 26), wenn ein Schwellwert des analogen elektrischen Signals erreicht oder überschritten ist.

Die Erfindung betrifft weiter einen Schienenfahrzeugverbund oder Schienenfahrzeugteilverbund, das/der zur Durchführung des vorgenannten Verfahrens eingerichtet ist, sowie eine Einrichtung (50) zur Steuerung eines elektrisch ansteuerbaren Systems.

## Beschreibung

Die vorliegende Erfindung betrifft ein Verfahren zur Steuerung eines elektrisch ansteuerbaren Systems in einem Verbund aus Fahrzeugen oder Fahrzeugteilen.

Bei Schienenfahrzeugverbünden mit gelenkig verbundenen Schienenfahrzeugen oder Schienenfahrzeugteilen ist es erforderlich, die Stellung der Schienenfahrzeuge oder Schienenfahrzeugteile zueinander zu ermitteln, beispielsweise bei einer Fahrt durch eine Kurve oder bei einem Haltepunkt in einer Kurve. Mit dieser Information kann beispielsweise die Fahrzeuggeschwindigkeit und Fahrzeugbeschleunigung des Schienenfahrzeugverbunds bei einer Kurvenfahrt geregelt werden. Je enger der Kurvenradius ist, desto mehr sind die Schienenfahrzeuge oder Schienenfahrzeugteile zueinander gedreht und desto geringer muss die Beschleunigung und/oder die Geschwindigkeit gewählt werden, um ein Entgleisen des Fahrzeugs zu verhindern. Eine weitere Anwendung ist die Steuerung der Türöffnung. Wenn beispielsweise zwei Schienenfahrzeuge oder Schienenfahrzeugteile des Schienenfahrzeugverbunds zueinander gedreht sind, dann kann ein Türblatt oder Türflügel einer Schwenkschiebetür, das/die an einem der Schienenfahrzeuge oder Schienenfahrzeugteil angeordnet ist, beim Öffnen gegen den anderen Schienenfahrzeugteil oder gegen einen Verbindungsteil, das die beiden Schienenfahrzeugteile verbindet, beispielsweise einen Balg, stoßen. Betroffen sind sowohl kurveninnenseitige Türen wie kurvenaußenseitige Türen, insbesondere aber eine Tür, die sich auf der Kurveninnenseite befindet. Um ein Anstoßen zu verhindern, wird die Bewegung dieses Türflügels je nach Stellung der Schienenfahrzeuge oder Schienenfahrzeugteile zueinander durch eine Steuerung begrenzt oder die Öffnung des Türflügels ganz verhindert. Hierbei spricht man von der Steuerung der Türöffnungsweite.

Eine bekannte Methode zur Steuerung der Fahrzeugbeschleunigung, der Fahrzeuggeschwindigkeit und der Türöffnungsweite ist die Erfassung der Stellung der Schienenfahrzeuge oder Schienenfahrzeugteile zueinander mittels eines oder mehrerer End- oder Näherungsschalter zur Feststellung eines Soll- oder Grenzwertes. Hierbei sind die End- oder Näherungsschalter im Übergangsbereich zwischen den Schienenfahrzeugen oder Schienenfahrzeugteilen angeordnet. Diese Methode wird bei dem Gelenktriebwagen NGT D12DD des Herstellers Bombardier Transportation, 2003-2010 an die Dresdner Verkehrsbetriebe ausgeliefert, angewandt. Die End- oder Näherungsschalter sind beispielsweise im Bereich des Gelenklagers oder außerhalb des Bereiches des Gelenklagers angeordnet, beispielsweise im Bereich einer Drehscheibe, die zwischen benachbarten Schienenfahrzeugteilen angeordnet ist.

Nachteilig ist bei dieser Lösung eine relativ aufwendige Montage und Justierung. Zudem ist die Genauigkeit der Steuerung von Beschleunigung, Geschwindigkeit und Türöffnung nicht im erwünschten Maße gegeben. Außerdem kann nur ein binäres Signal (Ein/Aus) ausgegeben werden. Soll dieses Signal bei einem anderen Winkel ausgeben werden, ist eine aufwendige Umpositionierung des Sensors notwendig. Schließlich benötigt die Lösung relativ viel Platz zur Montage und sind nicht so verschleißfrei wie erwünscht.

Die Patentanmeldung WO 2013/124429 A1 offenbart ein Verfahren zur Steuerung der Öffnung einer Tür bei mindestens zwei gelenkig miteinander verbundenen Schienenfahrzeugen, mit mindestens einem Sensor, oder mindestens einer Sensoranordnung, wobei der Sensor oder die Sensoranordnung zur Bestimmung des Winkels zwischen den Längsachsen zweier Schienenfahrzeuge eingerichtet ist, und wobei der Sensor ein Winkelsensor ist. Bei dem Verfahren wird im Sensor ein vom Winkel zwischen den Längsachsen der Schienenfahrzeuge oder Schienenfahrzeugteile abhängiges Signal erzeugt, oder im Sensor bei der Drehung der Schienenfahrzeuge zueinander eine Signalfolge erzeugt. Das erzeugte Signal wird an eine Signalverarbeitungseinrichtung weitergeleitet, die das Signal verarbeitet und den Winkel zwischen den Längsachsen der Schienenfahrzeuge oder Schienenfahrzeugteile bestimmt. Die Information über den Winkel zwischen den Längsachsen der Schienenfahrzeuge wird an eine Steuerungseinrichtung weitergeleitet, die auf Grundlage des Winkels die Öffnung der Tür steuert. Die Signalverarbeitung ist hierbei relativ aufwändig.

Die vorliegende Erfindung hat die Aufgabe, eines oder mehrere dieser Probleme zu lösen.

Nach einer allgemeinen Idee der Erfindung wird ein von einem Winkelsensor erzeugtes elektrisches Signal, insbesondere eine Spannung, verwendet und festgestellt, ob ein Schwellwert des Signals erreicht oder überschritten ist. Es kann ein Schwellwert aus dem Analogwertbereich des Signals verwendet werden, um ein System zu betätigen oder zu stoppen. Wenn der Schwellwert des Signals erreicht oder überschritten ist, kann insbesondere ein digitales Signal erzeugt werden, das dazu verwendet werden kann, ein System zu betätigen oder zu stoppen. Wenn also der Schwellwert des analogen elektrischen Signals erreicht oder überschritten ist, wird das elektrisch ansteuerbare System betätigt oder gestoppt, oder anders ausgedrückt: aktiviert oder deaktiviert, beispielsweise durch das erwähnte digitales Signal. Das elektrisch ansteuerbare System ist insbesondere ein schaltbares System, das vorzugsweise ein- oder ausgeschaltet werden kann.

Die Erfindung ist bei Fahrzeugen anwendbar, die gelenkig miteinander verbundene Fahrzeugteile aufweisen, wie Waggons, Wagen, Module etc., und wo eine Kurve oder ein Drehwinkel mit einem Winkelsensor ermittelbar ist oder ermittelt wird. Die Erfindung ist insbesondere vorteilhaft in Schienenfahrzeugen anwendbar, wie z.B. in U-Bahnen, S-Bahnen, Straßenbahnen, Regionalverkehrszügen, Fernverkehrszügen. Ebenfalls anwendbar ist die Erfindung in nicht-schienengebundenen Fahrzeugen. Ein Beispiel hierfür sind Gelenkbusse.

Ein elektrisch ansteuerbares System gemäß der Erfindung kann jedes System außer einer Fahrzeugsteuerung, einer Antriebssteuerung oder einer Steuerungseinrichtung für die Beschleunigung, das Drehmoment oder die Geschwindigkeit sein. Ein elektrisch ansteuerbares System ist vorzugsweise ein System, das durch ein Signal betätigt oder gestoppt werden kann. Beispielhaft ist ein System, das zur Ausführung oder Nichtausführung einer Funktion angeschaltet oder ausgeschaltet bzw. betätigt oder gestoppt werden kann.

Es ist zudem möglich, das Analogsignal des Winkelsensors ohne Hinzuziehung eines Schwellwertes und vorzugsweise in kontinuierlicher Form in einer weiteren Einrichtung zu verarbeiten und eine Beschleunigung, ein Drehmoment oder eine Geschwindigkeit eines Verbunds von zumindest zwei gelenkig miteinander verbundene Fahrzeugen oder eines Verbunds von zumindest zwei gelenkig miteinander verbundenen Fahrzeugteilen zu steuern. Die weitere Einrichtung, auf die nachfolgend Bezug genommen wird, ist insbesondere eine Fahrzeugsteuerung, eine Antriebssteuerung oder eine Steuerungseinrichtung für die Beschleunigung, ein Drehmoment und/oder die Geschwindigkeit.

Es ist möglich, mit nur einem analogen Winkelsensor zwei Funktionen zu erfüllen: Zum einen die Erzeugung eines Schaltpunktes zur Verarbeitung in einem elektrisch ansteuerbaren System und zum anderen die Verarbeitung des Analogsignals des Winkelsensors in der weiteren Einrichtung. Ein analoges Signal kann gleichzeitig von der genannten weiteren Einrichtung, beispielsweise durch Leitung an ein analoges Eingangsmodul der weiteren Einrichtung, und von einem Schwellwertschalter für Analogsignale in dem elektrisch ansteuerbaren System benutzt werden. Dadurch wird die gleichzeitige Nutzung eines Sensorsignals als Analogwert, vorzugsweise kontinuierlich, zur Auswertung in beispielsweise einer Fahrzeugsteuerung oder Antriebssteuerung und die Verarbeitung mittels Schwellwert zur weiteren Verarbeitung eines bestimmten Schaltpunktes aus dem Analogwertbereich ermöglicht. Es ist insbesondere möglich, den Knickwinkel zwischen Schienenfahrzeugen oder Schienenfahrzeugteilen in der Fahrzeugsteuerung zur Berechnung eines maximalen oder minimalen Beschleunigungsmoments zu verwenden und gleichzeitig einen Schaltpunkt auf Basis eines Schwellwertes zu erzeugen und in einem elektrisch ansteuerbaren System zu verarbeiten, insbesondere dieses zu betätigen oder anzuhalten.

Bei dem Verfahren kann zum Beispiel ein Antriebsmoment, eine Geschwindigkeit oder Beschleunigung in bei einem Fahrzeug oder Fahrzeugteil, das in eine Kurve einfährt, sich in einer Kurve befindet, oder aus einer Kurve ausfährt, eingestellt, insbesondere begrenzt, werden. Der Kurvenradius kann definiert sein oder ermittelt werden, beispielsweise durch Ermittlung einer Fliehkraft. Es kann gleichzeig bei einem Schwellwert oder Schaltpunkt eine anderweitige Einrichtung aktiviert oder deaktiviert werden, insbesondere eine Türsteuerung zum Anhalten der Tür oder zur Begrenzung der Türöffnungsweite, oder eine Spurkranzschmieranlage zur Auslösung der Spurkranzschmierung. Es kann bei Erreichen des Schwellwertes oder Auslösen des Schaltpunktes ein Signal an die anderweitige Einrichtung übermittelt werden, insbesondere die Einrichtung aktiviert oder deaktiviert werden.

Angegeben wird von der vorliegenden Erfindung insbesondere ein Verfahren nach Anspruch 1. Vorteilhafte Ausgestaltungen dieses Verfahrens sind in den Unteransprüchen angegeben.

Bereitgestellt wird von der vorliegenden Erfindung somit ein Verfahren zur Steuerung eines elektrisch ansteuerbaren Systems, das in einem Verbund von zumindest zwei gelenkig miteinander verbundenen Fahrzeugen oder einem Verbund von zumindest zwei gelenkig miteinander verbundenen Fahrzeugteilen angeordnet ist, umfassend
- Erzeugen eines analogen elektrischen Signals mit zumindest einem Winkelsensor oder zumindest einer Winkelsensoranordnung in Abhängigkeit eines Winkels zwischen den Längsachsen der zumindest zwei Fahrzeuge oder der zumindest zwei Fahrzeugteile,
- Feststellen, ob ein Schwellwert des analogen elektrischen Signals erreicht oder überschritten ist,
- Aktivieren oder deaktivieren eines elektrisch ansteuerbaren Systems, wenn der Schwellwert des analogen elektrischen Signals erreicht oder überschritten ist.

Das Fahrzeug ist bevorzugt ein Schienenfahrzeug. Entsprechen sind erwähnte Fahrzeugteile vorzugsweise Schienenfahrzeugteile. Beispiele für Schienenfahrzeuge sind, ohne Beschränkung, Lokomotiven, Waggons, Triebwagen, Straßenbahnwagen. Ein Schienenfahrzeug weist vorzugsweise einen abgeschlossenen Raum auf, der von einem Wagenkasten umgeben ist.

Schienenfahrzeugteile sind beispielsweise Module, die zu einem Schienenfahrzeug zusammengesetzt werden. Insbesondere sind die Schienenfahrzeugteile Module einer Straßenbahn. Beispielsweise sind Schienenfahrzeugteile miteinander über eine flexible Struktur, insbesondere einen gelenkigen Balg, verbunden.

Ein Schienenfahrzeugverbund ist aus Schienenfahrzeugen zusammensetzt. Die Schienenfahrzeuge des Schienenfahrzeugverbunds können wiederum aus Schienenfahrzeugteilen zusammengesetzt sein. Ein spezielles Beispiel für einen Schienenfahrzeugverbund, ist eine Straßenbahn, die aus mehreren Straßenbahnwagen zusammengesetzt ist. Die Straßenbahnwagen können wiederum aus mehreren Modulen zusammengesetzt sein.

Ein Schienenfahrzeugteilverbund ist aus Schienenfahrzeugteilen zusammengesetzt. Ein spezielles Beispiel ist eine Straßenbahn, die nur aus Modulen zusammengesetzt ist, ohne dass mehrere Wagen vorhanden sind.

Ein Winkelsensor ist ein Sensor, der in einem bestimmten Winkelbereich, welcher von der Spezifikation des Sensors abhängt, verschiedene Winkel detektieren kann. Ein beispielhafter und nicht beschränkender Winkelbereich ist 0° bis +/-40°. Somit kann innerhalb des Messbereichs des Sensors ein Winkel, den die Schienenfahrzeuge oder Schienenfahrzeugteile zueinander einnehmen, erfasst werden. Innerhalb des Winkelbereichs kann der Sensor vorzugsweise kontinuierliche Winkel erfassen. Es ist aber bei einer anderen Art Winkelsensor auch möglich, dass der Sensor innerhalb des Winkelbereichs diskrete Winkelwerte mit einer bestimmten Schrittweite erfassen kann. Anders ausgedrückt ist/sind der/die Sensor(en) oder die Sensoranordnung(en) zur kontinuierlichen Bestimmung des Winkels oder zur Erfassung diskreter Winkelwerte in einer bestimmten Schrittweite eingerichtet.

Der Einsatz eines Winkelsensors bietet den Vorteil, dass die Fahrzeugfunktionen, wie Türöffnung, Geschwindigkeit, Drehmoment und Beschleunigung, ohne Modifikation des Winkelsensors auf variable Winkel der Fahrzeuge oder Fahrzeugteile zueinander angepasst werden können. Im Gegensatz dazu muss bei bekannten End- oder Näherungsschaltern die mechanische Positionierung des Schalters geändert werden, um eine andere Position der Fahrzeuge oder Fahrzeugteile zueinander detektieren zu können. Sollen verschiedene Drehpositionen der Fahrzeuge oder Fahrzeugteile zueinander erfasst werden, so kann dies erfindungsgemäß mit einem einzigen Winkelsensor erfolgen, wogegen im Stand der Technik dafür mehrere End- oder Näherungsschalter notwendig wären. Die erfindungsgemäße Lösung ist platzsparend und einfach und es sind weniger zusätzliche Bauteile notwendig als im Stand der Technik. Ferner ist die Montage und Einstellung deutlich einfacher.

Wenn mehrere Winkelsensoren eingesetzt werden, um einen Winkel zwischen den Längsachsen zweier Fahrzeuge oder Fahrzeugteile zu bestimmen, wird in der vorliegenden Erfindung von einer "Sensoranordnung" gesprochen.

Winkelsensoren sind aus dem Stand der Technik bekannt und mit verschiedensten Charakteristika, beispielsweise messbarer Winkelbereich, Auflösung, Art des Ausganges (Strom, Spannung, Bus-Signal, Frequenz), Wiederholgenauigkeit, Linearität erhältlich.

Bei dem Sensor kann es sich z.B. um einen potentiometrischen Sensor, einen magnetoresistiven Sensor, einen Hallsensor, der gemäß dem elektro-magnetischen Halleffekt funktioniert, einen optischen Sensor, einen Sensor, der gemäß dem piezoelektrischen Effekt funktioniert, einen kapazitiven Sensor, einen induktiven Sensor, einen zur Abstands- und/oder Relativpositionsmessung ausgestalteten Wirbelstromsensor oder um einen Sensor handeln, der gemäß zumindest einer der genannten Funktionsweisen und/oder zumindest einer nicht genannten Funktionsweise arbeitet. Insbesondere magnetoresistive Sensoren und Hallsensoren können auch zu mehreren auf einem gemeinsamen Träger angeordnet sein, z. B. einem Mikroträger, ähnlich einem Mikrochip. Optische Sensoren erfassen z.B. eine von mehreren Markierungen, die an dem Gelenk ausgebildet sind, wenn sich die Markierung aus Sicht des Sensors vorbeibewegt. Bei einer anderen Art optischer Sensoren wird z.B. eine Laser-Triangulation durchgeführt und/oder wie bei einem Interferometer ein Vergleich mit einem Vergleichslichtstrahl durchgeführt. Bei einer weiteren Art optischer Sensoren werden an einer Stelle des Gelenks projizierte Muster erfasst.

Winkelsensoren sind z.B. angegeben in dem Artikel von William J. Fleming, "Overview of Automotive Sensors", IEEE Sensors Journal, Vol. 1, No. 4, Seite 296-308, Abschnitt C, Seiten 302/303.

Es kann ein einzelner Sensor oder eine Anordnung mehrerer Sensoren verwendet werden. Der Sensor oder die Sensoren können bei dem Fahrzeug(teil)verbund an jeder geeigneten Stelle, die für den Sensor und für die Winkelmessung geeignet ist, angebracht sein. Besonders bevorzugt ist der Sensor/sind die Sensoren im Bereich eines Gelenks oder am Gelenk selbst angebracht. Beispiele für die Anbringung eines Winkelsensors an einem Gelenk sind in der Patentanmeldung WO 2013/124429 A1 beschrieben und können auch in der vorliegenden Erfindung Verwendung finden.

Der Begriff "Gelenk" oder "Drehgelenk" bezeichnet ein Gelenk, um das ein erstes Fahrzeug, insbesondere ein Schienenfahrzeug, um eine senkrecht nach oben stehende Z-Achse des ersten Fahrzeugs relativ zu einem zweiten Fahrzeug gedreht werden kann, wobei das erste und das zweite Fahrzeug mit dem Gelenk aneinander gekoppelt sind. Außerdem bezeichnet der Begriff "Gelenk" oder "Drehgelenk" ein Gelenk, um das ein erster Fahrzeugteil um eine senkrecht nach oben stehende Z-Achse des ersten Fahrzeugteils relativ zu einem zweiten Fahrzeugteil gedreht werden kann, wobei der erste und der zweite Fahrzeugteil mit dem Gelenk aneinander gekoppelt sind.

Die Längsachse eines Fahrzeugs oder Fahrzeugteils wird auch als X-Achse bezeichnet. Eine Y-Achse eines Fahrzeugs oder Fahrzeugteils steht quer zum Fahrzeug oder Fahrzeugteil und senkrecht zur X- und Z-Achse des Fahrzeugs/Fahrzeugteils. Das Gelenk kann so ausgestaltet sein, dass ein Fahrzeug oder Fahrzeugteil relativ zu dem benachbarten Fahrzeug(teil) auch um seine X-Achse gedreht werden kann (Wankbewegung). Das Gelenk kann ferner so ausgestaltet sein, dass ein Fahrzeug oder Fahrzeugteil relativ zu dem benachbarten Fahrzeug(teil) auch um seine Y-Achse gedreht werden kann (Nickbewegung). Vorzugsweise sind Bewegungen um die X-, Y- und Z-Achse möglich.

Das Gelenk weist vorzugsweise zwei relativ zueinander drehbare Gelenkteile auf. Das eine Gelenkteil ist beispielsweise mit einem ersten Fahrzeug oder Fahrzeugteil verbunden und ein zweites Gelenkteil ist mit einem zweiten Fahrzeug oder Fahrzeugteil verbunden. Der Begriff "Gelenkteil" bezeichnet irgendein Teil des Gelenks, wobei das Teil für die eigentliche Gelenkfunktion nicht unbedingt erforderlich sein muss. Die Bauart des Gelenks ist nicht besonders beschränkt, unter der Voraussetzung, dass ein Winkelsensor an dem Gelenk anbringbar ist.

Wenn die Längsachsen zweier benachbarter, gelenkig verbundener Fahrzeuge oder Fahrzeugteile auf einer Flucht liegen, beispielsweise auf einer geraden, kurvenfreien Strecke, dann beträgt der Winkel zwischen den Längsachsen der Fahrzeuge oder Fahrzeugteile definitionsgemäß 0°, bezeichnet als Nulllage.

Der Sensor kann einen absoluten Winkel zwischen Fahrzeugen oder Fahrzeugteilen erfassen und ein elektrisches Signal ausgeben oder der Sensor kann eine Winkeländerung erfassen und diese zu einem Referenzwinkel, beispielsweise der Nulllage, in Bezug setzten.

Der Sensor kann an einer beliebigen Stelle entlang der Z-Achse angeordnet sein. Insbesondere ist dies der Fall, wenn zwischen benachbarten Fahrzeugen oder Fahrzeugteilen nur eine Drehung um die Z-Achse möglich ist. Wenn zwischen Fahrzeugen oder Fahrzeugteilen weitere Rotationsfreiheitsgrade bestehen, z.B. eine Rotation um die Y-Achse (Nicken, z.B. bei einer Fahrt über einen Hügel oder durch eine Senke), oder eine Rotation um die X-Achse (gegenseitige Rotation um die Fahrzeuglängsachse, Wanken), dann ist es bevorzugt, den Sensor so nahe wie möglich am Gelenkpunkt anzuordnen, was auch eine Anordnung am Gelenkpunkt selbst bedeuten kann. Der Gelenkpunkt ist der Punkt, wo sich mindestens die X-Achse oder Y-Achse mit der Z-Achse schneidet. Dies bedeutet, dass am Gelenkpunkt die X-Achse und/oder die Y-Achse die Z-Achse schneidet.

In einer speziellen Ausführungsform ist der Winkelsensor ein berührungsloser Winkelsensor. Der Begriff "berührungslos" bedeutet in einer seiner Bedeutungsformen, dass der Sensor an einem ersten Gelenkteil angebracht ist und ein zweites Gelenkteil, das relativ zu dem ersten Gelenkteil drehbar ist, nicht berührt. Beispielsweise kann ein Magnetsensor an dem ersten Gelenkteil angebracht sein und ein Magnet, auf den der Magnetsensor reagiert, kann an dem zweiten Gelenkteil angebracht sein. In einer weiteren Bedeutungsform bedeutet der Begriff "berührungslos", dass der Sensor ein erstes und ein zweites Element aufweist, wobei das erste Element an einem ersten Gelenkteil angebracht ist und das zweite Element an einem zweiten Gelenkteil angebracht ist, wobei sich das erste und das zweite Element des Sensors nicht berühren und wobei das erste und das zweite Gelenkteil, und das erste und das zweite Element des Sensors, relativ zueinander drehbar sind. Das bedeutet, dass durch eine relative Drehung der Gelenkteile die daran angebrachten Sensorelemente relativ zueinander drehbar sind.

Bevorzugte Beispiele für berührungslose Winkelsensoren sind Magnetsensoren, optische Sensoren und induktive Sensoren. Der Begriff "Magnetsensoren" bezeichnet Sensoren, die auf die Änderung eines Magnetfeldes in ihrer Umgebung, insbesondere die Änderung einer magnetischen Flussdichte, reagieren. Sie können alternativ auch als "Magnetfeldsensitive-Sensoren" bezeichnet werden. Bevorzugte Beispiele für Magnetsensoren sind Hall-Sensoren und magnetoresistive Sensoren. Berührungslose Magnetsensoren sind beispielsweise in US 5,880,586 A beschrieben.

In einer bevorzugten Variante wird ein Hall-Sensor eingesetzt. Das vom Drehwinkel abhängige Signal ist dann beispielsweise ein sich sinusförmig änderndes Spannungssignal oder - bei Einsatz mehrerer zueinander versetzt positionierter Hallelemente - mehrere sich sinusförmig ändernde Spannungssignale, die zueinander phasenverschoben sind. Aus diesen Signalen kann in bekannter Weise der Winkel zwischen den Längsachsen der Fahrzeuge oder Fahrzeugteile ermittelt werden.

In einer Ausführungsform der Erfindung wird ein Schwellwertschalter betätigt, wenn der Schwellwert des analogen elektrischen Signals erreicht oder überschritten wird. Es wird in dieser Ausführungsform mit dem Schwellwertschalter das elektrisch ansteuerbare System aktiviert oder deaktiviert. Das analoge elektrische Signal wird vorzugsweise direkt an den Schwellwertschalter geleitet. Der Schwellwertschalter wertet dann das analoge Signal aus. Der Schwellwertschalter kann ein extra Bauteil sein, beispielsweise dem elektrisch ansteuerbaren System vorgeschaltet, oder in das elektrisch ansteuerbare System integriert sein. Ein Schwellwertschalter ist beispielsweise ein elektrisches oder elektronisches Bauelement, das die Funktion eines Sensors mit einer Schaltfunktion kombiniert. Der Schaltvorgang wird ausgelöst, wenn die vom Sensor gemessene physikalische Größe einen voreingestellten Grenzwert, nämlich den Schwellwert, über- oder unterschreitet.

Das elektrisch ansteuerbare System ist insbesondere eine Türbetätigungseinrichtung, wie eine Türöffnungs- und eine Türschließeinrichtung, eine Spurkranzschmieranlage oder eine richtungsverstellbare Beleuchtungseinrichtung. Von einem elektrisch ansteuerbaren System, insbesondere dem genannten, kann das analoge elektrische Signal direkt eingelesen werden. Nachfolgend werden einzelne Ausführungsbeispiele für ein elektrisch ansteuerbares System näher beschrieben.

### a) Türbetätigungseinrichtung

Mit der Türbetätigungseinrichtung kann eine Steuerung der Türöffnung erfolgen, insbesondere kann eine Tür geöffnet oder geschlossen werden. Wenn zwei benachbarte Fahrzeuge oder Fahrzeugteile so zueinander gedreht sind, dass der Winkel zwischen den Längsachsen der Fahrzeuge oder Fahrzeugteile ungleich Null ist (Abweichung von der oben definierten Nulllage), kann das Türblatt einer Schwenkschiebetür, die an einem der beiden Fahrzeuge oder Fahrzeugteile angeordnet ist, beim Öffnen gegen das andere Fahrzeug oder den anderen Fahrzeugteil stoßen, oder gegen ein Verbindungsteil, das zwei Fahrzeugteile miteinander verbindet, beispielsweise einen Balg. Betroffen ist insbesondere ein Türblatt einer Tür, die sich auf der Kurveninnenseite befindet und betroffen ist insbesondere eine Tür, die im Bereich des Endes eines Fahrzeugs angeordnet ist, an welches das benachbarte zweite Fahrzeug angekoppelt ist, oder eine Tür, die im Bereich des Endes eines Fahrzeugteils angeordnet ist, an das ein benachbarter zweiter Fahrzeugteil anschließt, beispielsweise über ein gelenkiges Verbindungselement, wie einen Balg. Um ein Anstoßen eines Türblatts zu verhindern, wird die Bewegung dieses Türblatts je nach Stellung der Fahrzeuge oder Fahrzeugteile zueinander begrenzt, oder die Türöffnungsbewegung unterbrochen. Es kann somit mit dem Verfahren eine Begrenzung der Türöffnungsweite in engen Kurven erfolgen. Alternativ oder zusätzlich kann die Öffnung einer Tür gänzlich verhindert werden, wenn der Schwellwert überschritten ist.

Es kann die Öffnung einer oder mehrerer Türen gesteuert werden. Es ist mindestens eine Tür an einem der beiden Fahrzeuge oder Fahrzeugteile angeordnet. Bei mehreren Türen können diese an verschiedenen Fahrzeugen/Fahrzeugteilen angeordnet sein. Die Tür ist zum Beispiel eine Schwenkschiebetür mit ein oder zwei Türblättern. Schwenkschiebetüren werden vielfach in Fahrzeugen des öffentlichen Nahverkehrs eingesetzt. Typischerweise schließen sie im geschlossenen Zustand bündig mit der Außenwand des Fahrzeugs ab. Bei der Öffnung bewegt sich die Schwenkschiebetür zunächst nach außen und wird dann zur Seite verschoben. Die Bewegung seitwärts kann jedoch auch bereits während der Bewegung nach außen beginnen. Dies bedeutet, dass die Tür trotz dem Begriff "Schwenken" keine isolierte Schwenkbewegung ausführen muss, eine Schwenkbewegung aber stattfinden kann. Die Bezeichnung Schwenkschiebetür wird in der Praxis aber verwendet, da bei vielen solcher Türen beim Öffnen und Schließen eine Schwenkbewegung ausgeführt wird.

Anwendbar ist das Verfahren insbesondere bei einer Tür, die im Bereich des Endes eines Fahrzeugs angeordnet ist, an welches ein benachbartes zweites Fahrzeug angekoppelt ist, oder bei einer Tür, die im Bereich des Endes eines Fahrzeugteils angeordnet ist, an das ein benachbarter zweiter Fahrzeugteil anschließt.

### b) Spurkranzschmierung

Die Spurkranzschmierung dient bei Schienenfahrzeugen dazu, den Verschleiß der Spurkränze und Schienen sowie die Geräuschentwicklung zu reduzieren. Insbesondere in Kurven entstehen Reibungskräfte zwischen dem Spurkranz und der Schienenflanke, was zu Abnutzung führt. Weiterhin entsteht starke Lärmentwicklung, insbesondere Quietschen. Um dies zu reduzieren, können mittels einer Spurkranzschmiereinrichtung Schmierstoffe auf die Spurkränze oder Flanken der Schienen aufgebracht werden, welche die Reibung und somit auch Verschleiß und Geräuschentwicklung reduzieren. Viele Schienenfahrzeuge besitzen an einem oder mehreren Radsätzen, beispielsweise an dem in Fahrtrichtung vordersten Radsatz, eine Spurkranzschmiereinrichtung, die in

Abhängigkeit von der Zeit, der Wegstrecke und/oder dem Kurvenradius Schmierfett auf den Spurkranz aufbringt. Es kann hierbei durch eine Pumpe oder mittels Druckluft ein Schmiermittel auf den Spurkranz der Räder aufgebracht werden.

Die Spurkranzschmiereinrichtung wird erfindungsgemäß in einer Kurve angesteuert. Bisher war bekannt, eine GPS-Ortsbestimmung vorzunehmen, um festzustellen, ob sich das Fahrzeug in einer Kurve befindet und die Spurkranzschmierung erfolgen soll bzw. die Spurkranzschmiereinrichtung eine Schmierung bewirken soll. Erfindungsgemäß wird die Spurkranzschmiereinrichtung betätigt, wenn durch den Winkelsensor ein elektrisches Signal an die Spurkranzschmiereinrichtung übermittelt wird und wenn ein Schwellwert des Signals erreicht oder überschritten ist. Der Schwellwert des Signals kann beispielsweise einen bestimmten Kurvenradius abbilden, der erreicht oder unterschritten ist. Beispielsweise weist die Spurkranzschmiereinrichtung ein oder mehrere Magnetventile auf. Beim Öffnen des Magnetventils wird Schmiermittel freigesetzt und auf den Spurkranz aufgebracht. Die Spurkranzschmiereinrichtung kann weiterhin einen bereits erwähnten Schwellwertschalter aufweisen, der bei einem Schwellwert des Signals aus dem Winkelsensor betätigt wird. Beispielsweise wird ab einem bestimmten Strom oder einer bestimmten Spannung der Schwellwertschalter geschlossen, wodurch eine Öffnung des erwähnten Magnetventils bewirkt wird.

### c) Beleuchtungseinrichtung

Eine richtungsverstellbare Beleuchtungseinrichtung ist insbesondere ein sogenanntes Kurvenlicht. Hierbei wird die Ausrichtung des Scheinwerfers so gesteuert, dass der Kurvenweg des Fahrzeugs beleuchtet wird. Mittels des erwähnten Schwellwerts kann die Beleuchtungseinrichtung so angesteuert werden, dass bei einem Schwellwert ein oder mehrere Scheinwerfer in Richtung der Kurve verdreht werden.

Wie bereits erwähnt ist das erfindungsgemäß möglich, neben dem bereits erläuterten elektrisch ansteuerbaren System, das auf einen Schwellwert reagiert, auch ein weiteres System oder eine weitere Einrichtung anzusteuern. Die Ansteuerung des elektrisch ansteuerbaren Systems und dieser weiteren Einrichtung kann mittels eines Signals erfolgen, das von dem erwähnten Winkelsensor generiert wird. In einer Ausführungsform wird das analoge elektrische Signal zusätzlich auch an eine Fahrzeugsteuerung oder eine Antriebssteuerung übermittelt. In dieser weiteren Einrichtung, insbesondere der Fahrzeugsteuerung oder Antriebssteuerung, wird das analoge elektrische Signal vorzugsweise kontinuierlich verarbeitet und nicht hinsichtlich eines Schwellwerts ausgewertet, wie es bei dem elektrisch ansteuerbaren System, das zuvor beschrieben wurde, der Fall ist.

In der Fahrzeugsteuerung oder der Antriebssteuerung kann eine Geschwindigkeit, ein Drehmoment eines Antriebs oder eine Beschleunigung eines oder mehrerer Fahrzeuge, eines oder mehrerer Fahrzeugteile oder eines Verbunds davon in Abhängigkeit des analogen elektrischen Signals gesteuert werden.

Die Beschleunigung, das Drehmoment und/oder Geschwindigkeit kann so gesteuert werden, dass je nach Winkelposition der Fahrzeuge oder Fahrzeugteile zueinander, ausgedrückt durch das elektrische Signal aus dem Winkelsensor, ein Maximalwert der Beschleunigung, ein Maximalwert der Geschwindigkeit, ein Drehmomentmaximalwert oder ein Beschleunigungsgrenzwert errechnet wird. Mit der Steuerung kann die Beschleunigung in Abhängigkeit vom Winkel zwischen den Längsachsen der Fahrzeuge bzw. Fahrzeugteile unterbunden werden, insbesondere wenn ein Beschleunigungs-, Drehmoment- oder Geschwindigkeitsgrenzwert erreicht oder überschritten wird. Die Erfindung bietet dabei die Möglichkeit, den Winkel zum Unterbinden einer Beschleunigung in der Signalverarbeitungseinrichtung und/oder Antriebssteuerung zu variieren sowie die zulässige Beschleunigung, das zulässige Drehmoment oder die zulässige Geschwindigkeit in Abhängigkeit des Winkels bzw. des elektrischen Signals aus dem Winkelsensor zu berechnen. Ist der Maximalwert der Geschwindigkeit überschritten, kann eine negative Beschleunigung (Verzögerung) des Fahrzeuges mit einem Verzögerungswerte in Abhängigkeit vom Winkel eingeleitet werden. Der Begriff "Beschleunigung" umfasst somit eine positive wie eine negative Beschleunigung (Verzögerung). Beim bisherigen Stand der Technik, insbesondere wenn die Erfassung der Stellung der Fahrzeuge oder Fahrzeugteile zueinander mittels eines oder mehrerer End- oder Näherungsschalter erfolgt, ist ein Verändern des Winkels nur durch Umpositionierung des Sensors möglich.

Das analoge elektrische Signal des Winkelsensors ist beispielsweise eine vom Sensor ausgegebene Spannung oder ein Strom. Das Signal kann in einer analogen Signalverarbeitungseinrichtung verarbeitet werden, die Teil der Fahrzeugsteuerung oder Antriebssteuerung sein kann. Die Signalverarbeitungseinrichtung führt zum Beispiel einen Algorithmus aus, so dass am Ausgang der Signalverarbeitungseinrichtung das oder die gewünschten Ausgangssignale bereit stehen. Im Beispiel eines Winkelsensors wird von der Signalverarbeitungseinrichtung eine Winkelinformation als analoges Signal zur Verfügung gestellt. Das Winkelsignal kann an ein Interface eingespeist werden, das die Signalausgabe an externe Anschlüsse vorsieht oder eine weitere Verarbeitung eines Winkelsignals durchführt.

Eine Signalverarbeitungseinrichtung kann an verschiedenen Stellen angeordnet sein, beispielsweise als eigenständige bauliche Einheit zwischen dem Sensor und nachgeschalteten Komponenten, wie einem Signalübertragungsbus, einer Fahrzeugsteuerung oder einer Antriebssteuerung. Wenn das Signal des Sensors in der Fahrzeugsteuerung oder einer Antriebssteuerung digitalisiert wird, kann zwischen den Sensor und die Signalverarbeitungseinrichtung ein A/D-Wandler geschaltet sein.

In einem Aspekt betrifft die Erfindung eine Einrichtung zur Steuerung eines elektrisch ansteuerbaren Systems, das in einem Verbund von zumindest zwei gelenkig miteinander verbundene Fahrzeugen oder einem Verbund von zumindest zwei gelenkig miteinander verbundenen Fahrzeugteilen angeordnet ist, aufweisend
- einen Winkelsensor oder eine Winkelsensoranordnung, womit ein analoges elektrisches Signal in Abhängigkeit eines Winkels zwischen den Längsachsen zumindest zweier Fahrzeuge oder zumindest zweier Fahrzeugteile erzeugbar ist,
- einen Schwellwertschalter, der betätigbar ist, wenn ein Schwellwert des analogen elektrischen Signals erreicht oder überschritten wird,
- ein elektrisch ansteuerbares System, das mit dem Schwellwertschalter gekoppelt ist und das aktivierbar oder deaktivierbar ist, wenn der Schwellwert des analogen elektrischen Signals erreicht oder überschritten ist.

Die Einrichtung ist insbesondere zur Durchführung eines vorangehend beschriebenen Verfahrens ausgestaltet. Die Einrichtung kann eines oder mehrere der vorangehend bei der Beschreibung des Verfahrens erläuterten baulichen Elemente aufweisen, welchen die beschriebenen Funktionen zugeordnet sein können.

### In einer Ausführungsform weist die Einrichtung eine analoge

Signalverarbeitungseinrichtung auf, die bereits zuvor bei der Beschreibung des Verfahrens genannt wurde. Das analoge elektrische Signal ist über die analoge Signalverarbeitungseinrichtung an eine bereits erwähnte Fahrzeugsteuerung und/oder eine Antriebssteuerung übermittelbar, wobei in der Fahrzeugsteuerung und/oder Antriebssteuerung eine Geschwindigkeit, ein Drehmoment oder eine Beschleunigung in Abhängigkeit eines Wertes des analogen elektrischen Signals steuerbar ist.

In einem Aspekt betrifft die Erfindung ein Schienenfahrzeugverbund oder Schienenfahrzeugteilverbund, das/der zur Durchführung eines vorangehend beschriebenen Verfahrens eingerichtet ist. Beispielhafte Schienenfahrzeuge sind U-Bahnen, S-Bahnen, Straßenbahnen, Regionalverkehrszüge. Fernverkehrszüge.

Das Schienenfahrzeugverbund oder der Schienenfahrzeugteilverbund kann eines oder mehrere der vorangehend bei der Beschreibung des Verfahrens erläuterten baulichen Elemente aufweisen, welchen die beschriebenen Funktionen zugeordnet sein können. Insbesondere wird ein Schienenfahrzeug(teil)verbund angegeben, aufweisend
- einen Winkelsensor oder eine Winkelsensoranordnung, womit ein analoges elektrisches Signal in Abhängigkeit eines Winkels zwischen den Längsachsen zumindest zweier Schienenfahrzeuge oder zumindest zweier Schienenfahrzeugteile erzeugbar ist,
- einen Schwellwertschalter, der betätigbar ist, wenn ein Schwellwert des analogen elektrischen Signals erreicht oder überschritten wird,
- ein elektrisch ansteuerbares System, das mit dem Schwellwertschalter gekoppelt ist und das aktivierbar oder deaktivierbar ist, wenn der Schwellwert des analogen elektrischen Signals erreicht oder überschritten ist.

Das Schienenfahrzeugverbund oder der Schienenfahrzeugteilverbund kann weiterhin eine analoge Signalverarbeitungseinrichtung aufweisen, die bereits zuvor erwähnt wurde.

Nachfolgend wird die Erfindung anhand von Ausführungsbeispielen beschrieben. Es zeigen:
- Fig. 1: zwei miteinander gelenkig verbundene Schienenfahrzeugteile,
- Fig. 2: einen Ausschnitt aus der Fig. 1, in dem das Gelenk zwischen den beiden Schienenfahrzeugteilen gezeigt ist,
- Fig. 3: eine Detailansicht des Gelenks der Fig. 2, und
- Fig. 4: eine Einrichtung zur Durchführung des erfindungsgemäßen Verfahrens in einer schematischen Darstellung.

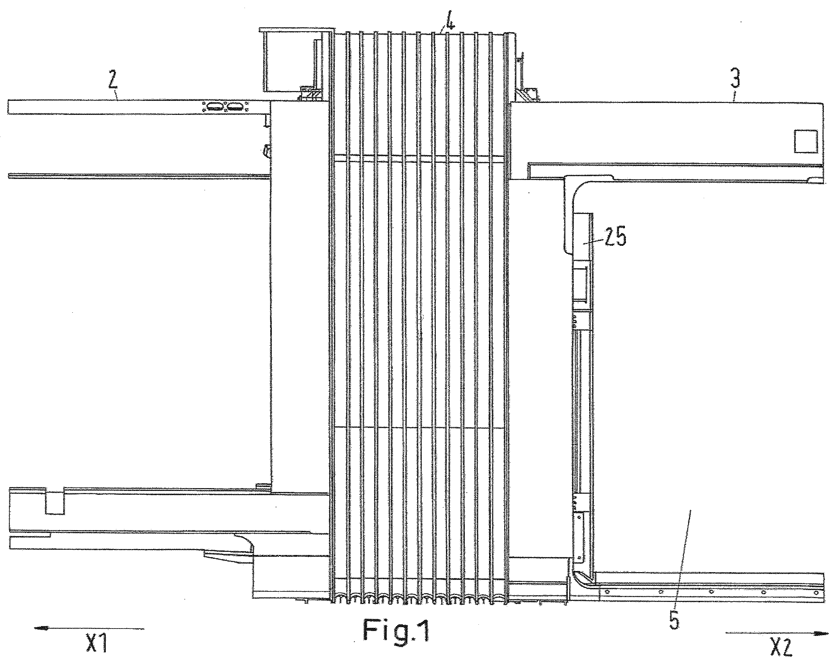

Die Fig. 1 zeigt ein Schienenfahrzeugteil 2, hier nur teilweise dargestellt mit strukturellen Elementen des Wagenkastens, und einen Schienenfahrzeugteil 3, ebenfalls nur teilweise dargestellt mit strukturellen Elementen des Wagenkastens. Beide Schienenfahrzeugteile 2, 3 sind mit einem Balg 4 verbunden. Im Schienenfahrzeugteil 3 ist eine Türöffnung 5 in der Nähe des Balgs 4 angeordnet. Ein Teil eines Türflügels 25, der in Richtung des Balgs 4 geöffnet ist, ist noch sichtbar. Der Balg 4 verdeckt ein Gelenk 1, das im unteren Bereich der Schienenfahrzeugteile 2, 3 angeordnet ist. Die Längsachse des Schienenfahrzeugteils 2 ist als X1-Achse in Form eines Pfeils eingezeichnet. Die Längsachse des Schienenfahrzeugteils 3 ist als X2-Achse in Form eines Pfeils eingezeichnet. Die Längsachsen X1, X2 liegen in der Zeichnungsebene. In der Stellung der Schienenfahrzeugteile gemäß Fig. 1 sind die Längsachsen X1 und X2 beider Schienenfahrzeugteile fluchtend, also in einer Gerade angeordnet, sodass der Winkel zwischen den Achsen X1 und X2 Null beträgt.

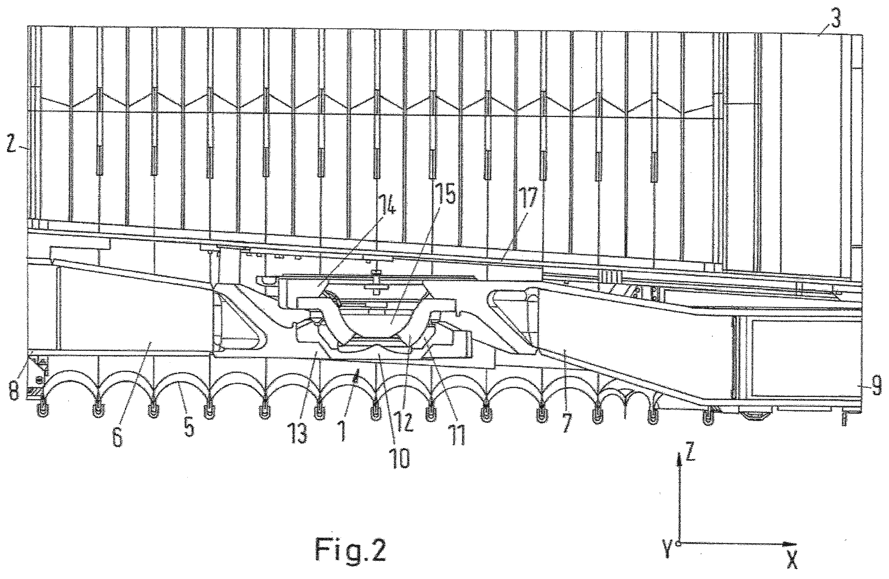

Die Fig. 2 zeigt einen Schnitt durch den unteren Teil des Balgs 4 und das Gelenk 1. Ein erster Gelenkträger 6 ist mit dem ersten Schienenfahrzeugteil 2 verbunden und ein zweiter Gelenkträger 7 ist mit dem zweiten Schienenfahrzeugteil 3 verbunden. Die Gelenkträger 6, 7 sind jeweils mit Trägern 8, 9 in den Untergestellen der Schienenfahrzeugteile 2, 3 verbunden.

Das Gelenk 1 weist am Gelenkträger 6, der mit dem ersten Schienenfahrzeugteil 2 verbunden ist, ein Lagerunterteil 10 auf, Das Lagerunterteil 10 ist in einem Lagergehäuse 13 des ersten Gelenkträgers 6 fixiert. Das Lagerunterteil 10 trägt das Gleitstück 11, das beispielsweise aus einem verschleißarmen Kunststoff gefertigt ist. In das Gleitstück 11 ist das Lageroberteil 12 eingesetzt, das im Lagergehäuse 14 des zweiten Gelenkträgers 7 fixiert ist. Somit ist das Lageroberteil 12 mit dem zweiten Gelenkträger 7 bzw. mit dem zweiten Schienenfahrzeugteil 3 fest verbunden und das Lagerunterteil 10 und das Gleitstück 11 sind mit dem ersten Gelenkträger 6 und dem ersten Schienenfahrzeugteil 2 verbunden.

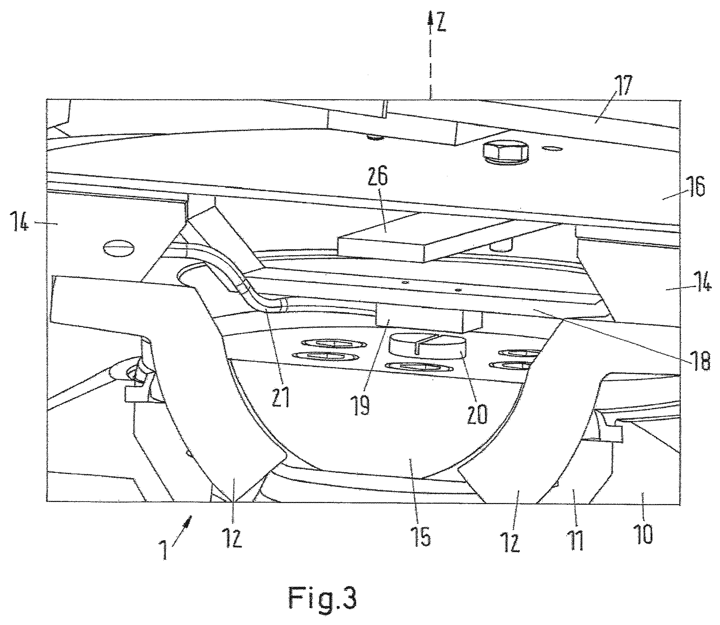

Bei einer Bewegung der Schienenfahrzeugteile 2 und 3 relativ zueinander bewegt sich das Lageroberteil 12 entlang des Gleitstücks 11. Das Lageroberteil 12 hat die Form eines Kugelsegments und das Gleitstück 11 ist komplementär zur äußeren Oberfläche des Lagerteils 12 geformt. Dadurch kann eine Bewegung der beiden Schienenfahrzeugteile 2, 3 relativ zueinander um die X-, Y- und Z-Achse stattfinden, die in der Fig. 2 in Form eines Koordinatensystems angezeichnet sind. In der Fig. 2 verläuft die Blickrichtung des Betrachters entlang der Y-Achse, die senkrecht zur Blattebene steht. Die in Fig. 2 eingezeichnete X-Achse ist die Längsachse des Schienenfahrzeugteils 3, die in der Fig. 1 als X1-Achse bezeichnet ist. Der Schnittpunkt der X-, Y- und Z-Achse des Koordinatensystems zeigt in der Fig. 2 nicht den Gelenkpunkt, da das Koordinatensystem an einer beliebigen Stelle eingezeichnet ist. Die Lage des Gelenkpunkts wird in Fig. 3 gezeigt.

Die Sicherung 15, welche die Form eines Kugelteilstücks aufweist, sitzt im Lageroberteil 12 und sichert dieses in dem Lagerunterteil 10 bzw. auf dem Gleitstück 11. Die Sicherung 15 ist an dem Lagerunterteil 10 fixiert (Fixierung nicht gezeigt) und relativ zum Lagerunterteil 10 nicht beweglich, insbesondere nicht drehbar.

Die Fig. 3 zeigt eine Detailansicht des Gelenks 1. Das Gelenk ist mit einem Gelenkpfannendeckel 16, der auf dem Lagergehäuse 14 des zweiten Gelenkträgers 7 sitzt, verschlossen. Über dem Gelenkpfannendeckel 16 ist eine Drehscheibe 17 angeordnet (siehe auch Fig. 2), die im Übergangsbereich zwischen den beiden Schienenfahrzeugteilen 2 und 3 den Fußboden bildet. Am oben angeordneten Lagergehäuse 14 des zweiten Gelenkträgers 7 ist ein Träger 18 angebracht, der sich quer über das Lagergehäuse 14 erstreckt. An der Unterseite des Trägers 18 ist ein Magnetsensor 19, in diesem Fall ein Hall-Sensor, angebracht. Unterhalb des Sensors 19 ist ein Magnet 20 angeordnet, der auf der Sicherung 15 befestigt ist. Das Teil mit dem Bezugszeichen 26 ist ein Halteblech für den Gelenkpfannendeckel 16, der das Lager für Schmutz und Feuchtigkeit schützt.

Bei einer Drehung der Schienenfahrzeugteile 2 und 3 um die Z-Achse, die in der Fig. 3 als Pfeil dargestellt ist, werden der Sensor 19 und der Magnet 20 relativ zueinander um die Z-Achse gedreht, da der Sensor 19 über den Träger 18, das Lagergehäuse 14 und den zweiten Gelenkträger 7 mit dem zweiten Schienenfahrzeugteil 3 verbunden ist und der Magnet 20 über die Sicherung 15, das Lagerunterteil 10, das Lagergehäuse 13 und den ersten Gelenkträger 8 mit dem ersten Schienenfahrzeugteil 2 verbunden ist. Der Sensor 19 berührt weder die Sicherung 15 noch den Magneten 20 und ist somit ein berührungsloser Sensor. Das Signal des Sensors wird über das Sensorkabel 21 zu einer Signalverarbeitungseinrichtung, insbesondere einer Fahrzeugsteuerung (nicht gezeigt), geleitet. Der Magnet 20 ist von kreisförmiger Geometrie, wobei ein Halbkreis den Nordpol und der andere Halbkreis den Südpol des Magneten bildet.

In der Fig. 3 sind neben der Z-Achse gestrichelt auch die Y-Achse und die X-Achse eingezeichnet. Die eingezeichnete X-Achse ist die Längsachse des Schienenfahrzeugteils 3, die in der Fig. 1 als X1-Achse bezeichnet ist. Im Gelenkpunkt G schneiden sich die X-, Y- und Z-Achse. Man erhält bei dieser Ausführungsform eines Gelenks den Ort des Gelenkpunkts, wenn man die Sicherung 15, welche die Form eines Kugelteilstücks aufweist, gedanklich zu einer Vollkugel ergänzt und den Kugelmittelpunkt bestimmt. Der Gelenkpunkt G kann auch etwas anders lokalisiert sein, als er in Fig. 3 beispielhaft und nicht unbedingt geometrisch exakt eingezeichnet ist. Wie in Fig. 3 sichtbar, befindet sich der Sensor 19 am Ort des Gelenkpunkts G. Der Sensor kann aber auch an einer anderen Stelle nahe bei dem Ort des Gelenkpunkts G positioniert sein. Der Gelenkpunkt muss nicht unbedingt innerhalb des Sensors liegen (wie hier gezeigt), sondern der Sensor 19 kann in einer weiteren bevorzugten Ausführungsform so positioniert sein, dass der Gelenkpunkt G außerhalb des Sensors liegt. Der Sensor 19 ist aber vorzugsweise nahe bei dem Gelenkpunkt G angeordnet.

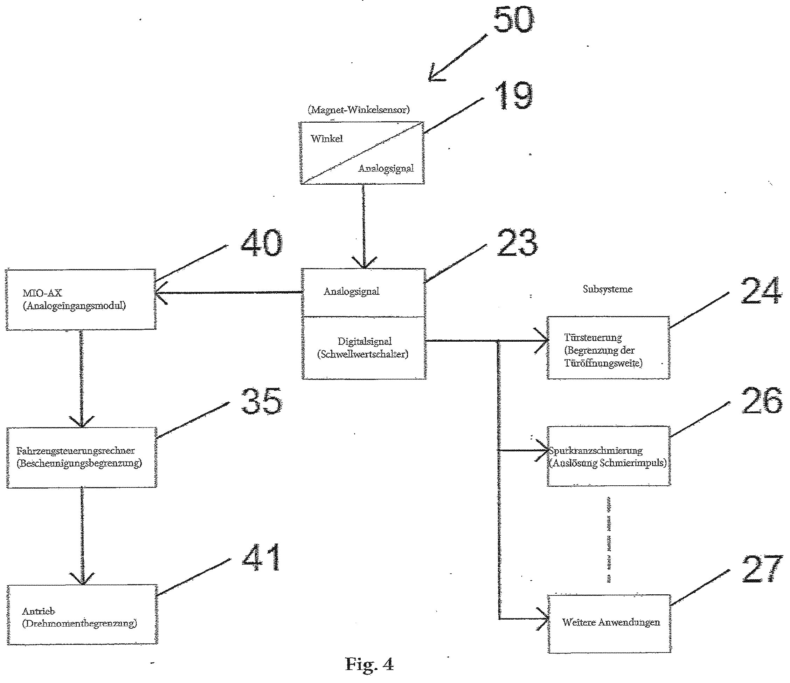

Fig. 4 zeigt eine Einrichtung 50 zur Steuerung eines elektrisch ansteuerbaren Systems. Von dem Winkelsensor 19 wird ein analoges elektrisches Signal, z.B. Strom oder Spannung, an einen Schwellwertschalter 23 übermittelt.

Ist ein vorgegebener Schwellwert erreicht, wird der Schalter 23 bei diesem Schaltpunkt betätigt und ein Digitalsignal erzeugt. Das Digitalsignal kann an verschiedene elektrisch ansteuerbare Systeme geleitet werden, hier eine Türsteuerung 24, eine Spurkranzschmieranlage 26, oder weitere Einrichtungen

Eine Türsteuerung 24 wird betätigt oder gestoppt oder die Türöffnungsweite begrenzt. Ein beispielhafter Schaltpunkt befindet sich im Bereich von 4-20 mA Strom. In diesem Beispiel wird die Türsteuerung 24 gestoppt, wenn ein bestimmter Knickwinkel des Gelenks zwischen Schienenfahrzeugen erreicht ist, was durch einen Strom ausgedrückt ist, der von dem Winkelsensor 19 ausgegeben wird, und der Öffnungsvorgang einer Tür wird gestoppt oder das Öffnen einer Tür verhindert. Beispielsweise wird das Öffnen eines Türflügels 25, der in Richtung des Balgs 4 öffnet (s. Fig. 1) verhindert, wenn ein Gelenk im Bereich des Balgs 4 eine gewisse Auslenkung überschreitet bzw. der Winkel zwischen den Längsachsen X1 und X2 (Fig. 1) der Wagenteile einen bestimmten Wert einnimmt, oder über- oder unterschreitet.

Ferner wird durch das Digitalsignal die Spurkranzschmieranlage 26 betätigt. Beispielsweise wird die Spurkranzschmieranlage 26 bei Durchfahren einer Kurve betätigt, was durch den Winkelsensor 19 bzw. einen von dem Sensor ausgegebenen Strom, der einen Schwellwert erreicht oder überschreitet, angezeigt wird. Bei Erreichen des Schwellwertes wird der Schalter 23 betätigt und des erwähnte Digitalsigna erzeugt, durch welches die Spurkranzschmieranlage 26 betätigt wird. Bei Betätigung der Spurkranzschmieranlage 26 wird in der Anlage ein Ventil geöffnet und Schmiermittel freigesetzt und auf die Spurkränze geleitet.

Das Analogsignal des Winkelsensors 19, in Form eines Stroms oder einer Spannung, wird weiterhin über den Schwellwertschalter 23 an das Analogeingangsmodul 40 eines Fahrzeugsteuerungsrechners 35 geleitet. Wird das Durchfahren einer Kurve festgestellt, durch Auswertung des Analogsignals, wird von dem Fahrzeugsteuerungsrechners 35 eine Begrenzung der Beschleunigung veranlasst. Der Wert der zugelassenen Beschleunigung ist von dem Wert des Analogsignals aus dem Winkelsensor 19 abhängig. Aufgrund des Signals aus dem Winkelsensor 19 kann ein zulässiges Beschleunigungsmoment berechnet werden, z.B. wenn das Fahrzeug in eine Kurve fährt.

Das Analogsignal des Winkelsensors 19 wird weiterhin über den Schwellwertschalter 23 und das Eingangsmodul 40 an den Antrieb 41 geleitet. Dort wird in Abhängigkeit des Signalwertes ein Drehmoment eingestellt oder auf einen maximalen Wert begrenzt.

Das analoge Signal aus dem Sensor 19, das zu dem Schwellwertschalter 23 geleitet wird, kann einen Wertebereich, z.B. Strombereich, annehmen und in diesem Wertebereich in dem Analogeingangsmodul verarbeitet werden, ohne dass ein Schaltpunkt definiert ist. Alternativ kann das Signal auch vor Weiterverarbeitung in Steuerungsrechner 35 oder dem Antrieb 41 digitalisiert werden, wobei hier aber keine Verarbeitung in Form eines Schwellwertes bzw. keine Schaltung von Komponenten 24, 26, 27 aufgrund einer Schwellwerterreichung stattfindet, wie in dem rechten Zweig der Fig. 4 gezeigt.

## Patentansprüche

1. Verfahren zur Steuerung zumindest eines elektrisch ansteuerbaren Systems (24, 26), das in einem Verbund von zumindest zwei gelenkig miteinander verbundenen Fahrzeugen oder einem Verbund von zumindest zwei gelenkig miteinander verbundenen Fahrzeugteilen (2, 3) angeordnet ist, umfassend
- Erzeugen eines analogen elektrischen Signals mit zumindest einem Winkelsensor (19) oder zumindest einer Winkelsensoranordnung in Abhängigkeit eines Winkels zwischen den Längsachsen (X1, X2) der zumindest zwei Fahrzeuge oder der zumindest zwei Fahrzeugteile (2, 3),
- Feststellen, ob ein Schwellwert des analogen elektrischen Signals erreicht oder überschritten ist,
- Aktivieren oder Deaktivieren eines elektrisch ansteuerbaren Systems (24, 26), wenn der Schwellwert des analogen elektrischen Signals erreicht oder überschritten ist,
und weiterhin
- Übermitteln des analogen elektrischen Signals an eine Fahrzeugsteuerung und/oder eine Antriebssteuerung (72, 73), wobei in der Fahrzeugsteuerung und/oder Antriebssteuerung (72, 73) eine Geschwindigkeit, ein Drehmoment oder eine Beschleunigung in Abhängigkeit eines Wertes des analogen elektrischen Signals gesteuert wird.

2. Verfahren nach Anspruch 1, wobei ein Schwellwertschalter (23, 25) betätigt wird, wenn der Schwellwert des analogen elektrischen Signals erreicht oder überschritten wird und mit dem Schwellwertschalter das elektrisch ansteuerbare System aktiviert oder deaktiviert wird.

3. Verfahren nach einem der vorangehenden Ansprüche, wobei das elektrisch ansteuerbare System eine Türbetätigungseinrichtung (24), eine Spurkranzschmiereinrichtung (26), und/oder eine richtungsverstellbare Beleuchtungseinrichtung ist.

4. Verfahren nach einem der vorangehenden Ansprüche, wobei das analoge elektrische Signal ein Strom oder eine Spannung ist.

5. Verfahren nach einem der vorangehenden Ansprüche, wobei eine Steuerung der Geschwindigkeit oder Beschleunigung in einem kontinuierlichen Wertebereich der Geschwindigkeit, des Drehmoments oder der Beschleunigung erfolgt.

6. Verfahren nach einem der vorangehenden Ansprüche, wobei der Verbund der zumindest zwei gelenkig miteinander verbundene Fahrzeuge oder der zumindest zwei gelenkig miteinander verbundenen Fahrzeugteile (2, 3) eine Straßenbahn, eine S-Bahn, ein Regionalzug oder ein Fernverkehrszug ist.

7. Einrichtung (50) zur Steuerung eines elektrisch ansteuerbaren Systems, das in einem Verbund von zumindest zwei gelenkig miteinander verbundene Fahrzeugen oder einem Verbund von zumindest zwei gelenkig miteinander verbundenen Fahrzeugteilen angeordnet ist, aufweisend
- einen Winkelsensor (19) oder eine Winkelsensoranordnung, womit ein analoges elektrisches Signal in Abhängigkeit eines Winkels zwischen den Längsachsen (X1, X2) zumindest zweier Fahrzeuge oder zumindest zweier Fahrzeugteile (2, 3) erzeugbar ist,
- einen Schwellwertschalter (23, 25), der betätigbar ist, wenn ein Schwellwert des analogen elektrischen Signals erreicht oder überschritten wird,
- ein elektrisch ansteuerbares System (24, 26), das mit dem Schwellwertschalter gekoppelt ist und das aktivierbar oder deaktivierbar ist, wenn der Schwellwert des analogen elektrischen Signals erreicht oder überschritten ist.

8. Einrichtung nach Anspruch 7, aufweisend
- eine analoge Signalverarbeitungseinrichtung, wobei das analoge elektrische Signal über die analoge Signalverarbeitungseinrichtung an eine Fahrzeugsteuerung und/oder eine Antriebssteuerung (72, 73) übermittelbar ist, wobei in der Fahrzeugsteuerung und/oder Antriebssteuerung (72, 73) eine Geschwindigkeit, ein Drehmoment oder eine Beschleunigung in Abhängigkeit eines Wertes des analogen elektrischen Signals steuerbar ist.

9. Schienenfahrzeugverbund oder Schienenfahrzeugteilverbund, das/der zur Durchführung eines Verfahrens nach einem der Ansprüche 1-6 eingerichtet ist.

10. Schienenfahrzeugverbund oder Schienenfahrzeugteilverbund nach Anspruch 9, aufweisend
- einen Winkelsensor (19) oder eine Winkelsensoranordnung, womit ein analoges elektrisches Signal in Abhängigkeit eines Winkels zwischen den Längsachsen (X1, X2) zumindest zweier Schienenfahrzeuge oder zumindest zweier Schienenfahrzeugteile (2, 3) erzeugbar ist,
- einen Schwellwertschalter (23, 25), der betätigbar ist, wenn ein Schwellwert des analogen elektrischen Signals erreicht oder überschritten wird,
- ein elektrisch ansteuerbares System (24, 26), das mit dem Schwellwertschalter gekoppelt ist und das aktivierbar oder deaktivierbar ist, wenn der Schwellwert des analogen elektrischen Signals erreicht oder überschritten ist.

11. Schienenfahrzeugverbund oder Schienenfahrzeugteilverbund nach Anspruch 10, aufweisend
- eine analoge Signalverarbeitungseinrichtung, wobei das analoge elektrische Signal über die analoge Signalverarbeitungseinrichtung an eine Fahrzeugsteuerung und/oder eine Antriebssteuerung (72, 73) übermittelbar ist, wobei in der Fahrzeugsteuerung und/oder Antriebssteuerung (72, 73) eine Geschwindigkeit, ein Drehmoment oder eine Beschleunigung in Abhängigkeit eines Wertes des analogen elektrischen Signals steuerbar ist.
